# EUROPEAN PATENT SPECIFICATION

(11) **EP 2 065 126 B1**
(45) Date of publication and mention of the grant of the patent: **10.11.2010**
(21) Application number: 08105652.5
(22) Date of filing: 24.10.2008
(51) Int. Cl.: B23Q 5/10, B23Q 11/12, H02K 9/04

(54) **Servo-ventilated electrospindle for machining marble, granite and other stony materials**
Elektrospindel mit Servolüftung zur Bearbeitung von Marmor, Granit und anderen Gesteinen
Mandrin électrique servo-ventilé pour l'usinage de marbre, granit et autres matériaux en pierre

(30) Priority: 27.11.2007 IT VI20070307
(43) Date of publication of application: 03.06.2009
(73) Proprietor: VEM S.p.A., 36015 Schio (VI) (IT)
(72) Inventor: Tonello, Paolo, 36015 Schio (Vicenza) (IT)
(74) Representative: Bettello, Pietro

(56) References cited:
- EP-A- 0 878 896
- DE-A1- 2 453 504
- FR-A- 2 384 585
- FR-A- 2 500 776

## Description

The present finding regards a servo-ventilated electrospindle used for machining stony materials such as marble, granite and the like.

The aforementioned material, in the form of blocks or tiles, are subjected to cutting, polishing, bevelling, milling and many other operations, performed by means of circular abrasive tools, mounted on a shaft, referred to as spindle, directly rotated by the rotor of an electric motor.

When the ventilation of the motor is required, inserted inside its framework - at the rear part - is a fan which, according to the prior art, is keyed directly on the spindle driving shaft.

According to such type of construction the fan always rotates at the same speed as the driving shaft, given that it is directly drawn by the abovementioned, but such speed varies substantially depending on the type of operation the tool is required to perform while, on the other hand, a proper and efficient ventilation of the motor can be obtained only through a rotation speed of the fan to be maintained fairly constant around a predetermined value.

For example, in a servo-ventilated electrospindle used for cutting stony material, the rotation speed of the driving shaft - controlled by means of an inverter - may vary, indicatively, from a minimum value of 900 rpm up to a maximum value of 6000 rpm, depending on the operation conditions of the tool.

This leads to the fan, which in order to operate in an ideal manner in this kind of operation should rotate between 1400 and 3000 rpm, being forced to rotate between a considerably low speed (900 rpm) - at which speed the amount of air it moves is clearly insufficient obtain a proper ventilation of the motor - and at a considerably high speed (6000 rpm), causing, alongside considerable noise, vibrations jeopardising the mechanical resistance of the fan itself.

In order to try to overcome these drawbacks, in the documents EP-A-0878896 and FR-A-2500776 it is described a servo-ventilated electrospindle in which the fan for cooling the motor is rotated by means of an electric motor, whose operation is independent from the operation of the principal electric motor. This enables the possibility that the motor of the fan could rotate at a rotation speed even different with respect to the rotation speed of the main motor.

The aim of the present invention is to provide a constructional improvement in this kind of known realization in order to improve the constructive and functional features of the electrospindle.

This is obtained with an eloctrospindle providing the features of the characterizing portion of the claim 1.

In particular with these features the entire length of the electrospindle can be remarkably reduced; moreover the fan group, besides of making an optimal fan action on the motor, being in direct contact with the said, is easily accessible for the ordinary maintenance and for the eventual substitution of the fan.

The finding shall be made clearer through the description of one of its possible embodiments, solely provided for exemplifying and non-limiting purposes, with the help of the attached drawings, wherein;
- fig 1 (tab. I) represents an elevated and sectioned view of the electrospindle subject, of the invention;

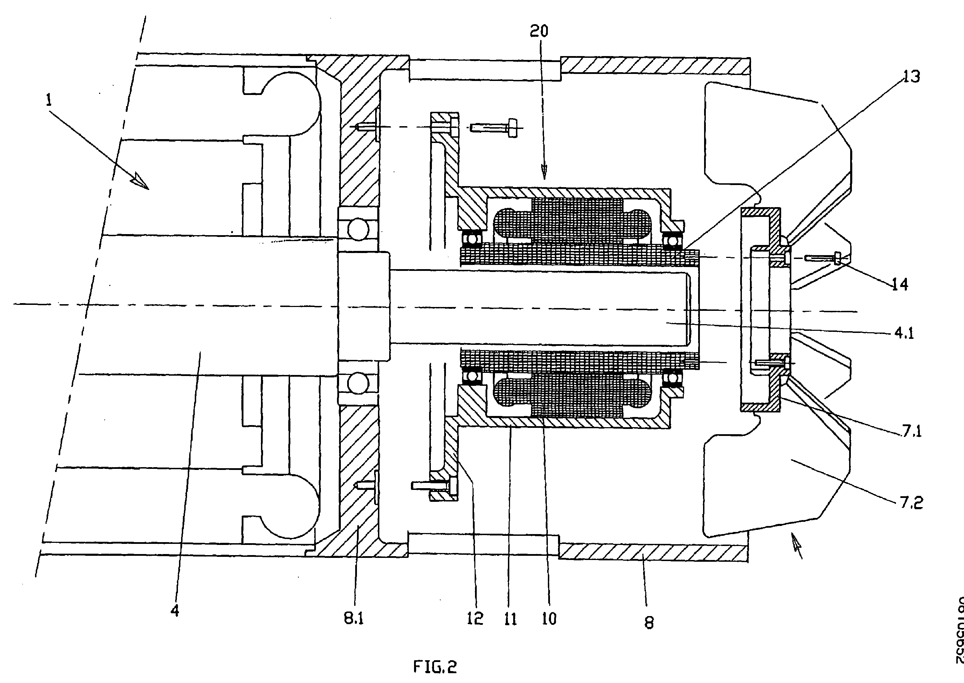

- fig 2 (tab, II) represents an exploded and sectioned view of the servo-motor of the fan.

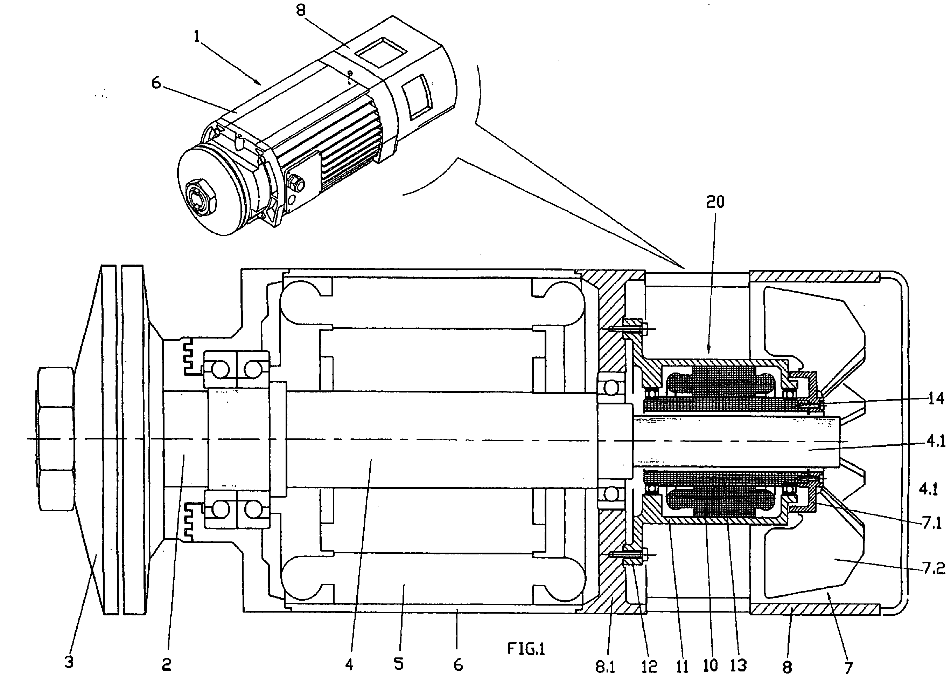

As observable in figure 1, the electrospindle, indicated in n its entirety with reference number 1, of the type comprising a spindle 2, mounted on which is a tool holder 3, is rotated, by means of its driving shaft 4, by the electric motor 5, enclosed in the framework 6, and it is provided with a fan 7, arranged, in the rear cover 8 of the abovementioned framework, the entire assembly being per se known.

As observable in fig. 1, the fan 7 is rotated by means of an electric motor or servo-motor indicated in its entirety with reference number 10, whose operation depends on the operation of the electric motor 5 which moves the tool; said fan rotates at a rotation speed even considerably different with respect to the rotation speed of the driving shaft 4.

The servo-motor 10 is arranged at the end part of the driving shaft 4 and its framework 11 is held, by means of the flange 12, on the front wall 8.1 of the cover 8, preferably in a coaxial manner with respect to said driving shaft.

In particular, by providing the servo-motor 10 with a rotor 13, which has an internal hole with a large diameter, it is possible to fit said rotor on the end part 4.1 of the driving shaft, in such a manner to considerably reduce the overall dimension of the servo-motor mounted coaxially on the driving shaft.

The fan 7 is applied on the rotor 13 of the servo-motor 10 through a ring 7.1, provided with fins 7.2, as well as held through the screws 14.

By using the construction solution subject of the finding, the entire ventilation group, indicated in its entirety with reference number 20, is not only completely independent from the electrospindle 1, but also moveable hence advantageously allowing the application on electrospindles of different type and facilitates its servo-motor or fan maintenance and possible replacement operations.

Obviously embodiments different from the one described are possible, depending on the type of fan and motor group but without for this reason departing from the scope of the following claims.

## Claims

1. SERVO-VENTILATED ELECTROSPINDLE FOR MACHINING MARBLE, GRANITE AND OTHER STONY MATERIALS, of the type comprising a spindles (2), mounted on which is the tool holder (3), rotated by means of the driving shaft (4) of the electric motor (5), enclosed in the framework (6) and provided with a fan (7) arranged in the rear cover (8) of the abovementioned framework,
said electrospindle (1) providing that the fan (7) is rotated by means of an electric motor or servo-motor (10), whose operation is independent from the operation of the spindle electric motor (5), the servo-motor (10) being independent from the other motor (5) and being susceptible to rotate at a rotation speed even different with respect to the rotation speed of the abovementioned, the servo-motor (10) being mounted at the end part of the driving shaft (4), and being mounted in a coaxial manner with respect to the driving shaft (4), the electropindle being **characterised in that** the rotor (13) of the servo-motor (10) has an internal hole with a large diameter, such to allow its coaxial insertion on the end part (4,1) of the driving shaft (4).

2. ELECTROSPINBLE, according to claim 1 **characterised in that** the framework (11) of the servo-motor (10) is held by means of a flange (12), on the front wall (8.1) of the rear cover (8).

3. ELECTROSPINDLE, according to one or more of the preceding claims, **characterised in that** the fan (7) is applied onto the rotor (13) of the servo-motor (10).

4. ELECTROSPINDLE, according to claim 3, **characterised in that** the fan (7) is applied onto the rotor (13) by means of a ring (7,1) provided with fins (7, 2), as well as held by means of screws (14).

5. ELECTROSPINDLE, according to one or more of the preceding claims, **characterised in that** the entire ventilation group (20) is entirely held inside the rear cover (8).

6. ELECTROSPINDLE, according to one or more of the preceding claims, **characterised in that** the entire ventilation group (20) is independent and moveable with respect to the entire electrospindle (1).

## Patentansprüche

1. Elektrospindel mit Servolüftung zur Bearbeitung von Marmor, Granit und anderen Gesteinen mit einer Spindel (2), auf welcher der Werkzeughalter (3) befestigt ist, der durch die Antriebswelle (4) des Elektromotors (5) in Rotation versetzt wird, eingeschlossen in der Rahmenkonstruktion (6) und versehen mit einem Ventilator (7), der in der hinteren Abdeckung (8) der vorgenannten Rahmenkonstruktion angeordnet ist,
wobei die Elektrospindel (1) dafür sorgt, dass der Ventilator (7) durch einen Elektromotor oder Servomotor (10) in Rotation versetzt wird, dessen Betrieb unabhängig ist von dem Betrieb des Spindelelektromotors (5), wobei der Servomotor (10) von dem anderen Motor (5) unabhängig ist und dazu gebracht werden kann, mit einer von der Rotationsgeschwindigkeit des vorgenannten Motors unterschiedlichen Rotationsgeschwindigkeit zu rotieren, wobei der Servomotor (10) am Endteil der Antriebswelle (4) und koaxial zur Antriebswelle (4) angebracht ist, wobei die Elektrospindel **dadurch gekennzeichnet ist, dass** der Rotor (13) des Servomotors (10) innen mit einem Loch mit einem großen Durchmesser versehen ist, um so sein koaxiales Einschieben auf das Endteil (4.1) der Antriebswelle (4) zu ermöglichen.

2. Elektrospindel nach Anspruch 1, **dadurch gekennzeichnet, dass** die Rahmenkonstruktion (11) des Servomotors (10) mit einem Flansch (12) an der Vorderwand (8.1) der hinteren Abdeckung (8) gehalten wird.

3. Elektrospindel nach einem oder mehreren der vorstehenden Ansprüche, **dadurch gekennzeichnet, dass** der Ventilator auf den Rotor (13) des Servomotors (10) aufgebracht ist.

4. Elektrospindel nach Anspruch 3, **dadurch gekennzeichnet, dass** der Ventilator (7) mittels eines mit Flügeln (7.2) versehenen Rings (7.1) auf den Rotor (13) aufgebracht ist und mit Schrauben (14) gehalten wird.

5. Elektrospindel nach einem oder mehreren der vorstehenden Ansprüche, **dadurch gekennzeichnet, dass** die gesamte Be- und Entlüftungs-Baugruppe (20) in der hinteren Abdeckung (8) aufgenommen ist.

6. Elektrospindel nach einem oder mehreren der vorstehenden Ansprüche, **dadurch gekennzeichnet, dass** die gesamte Be- und Entlüftungs-Baugruppe (20) unabhängig und in Bezug auf die gesamte Elektrospindel (1) beweglich ist.

## Revendications

1. Electrobroche servoventilée pour travailler du marbre, du granit et d'autres matériaux pierreux, du type comprenant une broche (2) montée sur ce qui est le porte-outil (3), mis en rotation par l'arbre d'entraînement (4) du moteur électrique (5), enserré dans le châssis (6) et muni d'un ventilateur (7) aménagé dans la calotte arrière (8) du châssis précité,
ladite électrobroche (1) assurant la rotation du ventilateur (7) à l'aide d'un moteur électrique ou d'un servomoteur (10), dont le fonctionnement est indépendant du fonctionnement du moteur électrique (5) de la broche, le servomoteur (10) étant indépendant de l'autre moteur (5) et étant susceptible de tourner à une vitesse de rotation même différente de la vitesse de rotation du moteur (10) susmentionné, le servomoteur (10) étant monté sur la partie d'extrémité de l'arbre d'entraînement (4) et de manière coaxiale par rapport à l'arbre d'entraînement (4), l'électrobroche étant **caractérisée en ce que** le rotor (13) du servomoteur (10) a un trou interne d'un grand diamètre, tel qu'il permette son insertion coaxiale sur la partie d'extrémité (4.1) de l'arbre d'entraînement (4).

2. Electrobroche selon la revendication 1, **caractérisée en ce que** le châssis (11) du servomoteur (10) est maintenu à l'aide d'une bride (12) sur la paroi avant (8.1) de la calotte arrière (8).

3. Electrobroche selon une ou plusieurs des revendications précédentes, **caractérisée en ce que** le ventilateur (7) est appliqué sur le rotor (13) du servomoteur (10).

4. Electrobroche selon la revendication 3, **caractérisée en ce que** le ventilateur (7) est appliqué sur le rotor (13) à l'aide d'un anneau (7.1) muni d'ailettes (7.2) ainsi que maintenu par des vis (14).

5. Electrobroche selon une ou plusieurs des revendications précédentes, **caractérisée en ce que** le groupe de ventilation (20) est entièrement maintenu à l'intérieur de la calotte arrière (8).

6. Electrobroche selon une ou plusieurs des revendications précédentes, **caractérisée en ce que** l'ensemble du groupe de ventilation (20) est indépendant et mobile par rapport à l'ensemble de l'électrobroche (1).
